# EUROPEAN PATENT APPLICATION

(11) **EP 3 770 116 A1**
(43) Date of publication of application: **27.01.2021**
(21) Application number: 19785034.0
(22) Date of filing: 09.04.2019
(51) Int. Cl.: C01D 7/07, H01M 10/54, H01M 10/052, C01G 53/10, C01G 51/10, C01G 45/10

(54) **METHOD FOR RECOVERING ACTIVE METALS FROM LITHIUM SECONDARY BATTERY**

(30) Priority: 09.04.2018 KR 20180040933; 15.02.2019 KR 20190017945
(71) Applicant: SK Innovation Co., Ltd., Seoul 03188 (KR)
(72) Inventor: LA, Yeon Hwa, Daejeon 34124 (KR); CHO, Kwang Kuk, Daejeon 34124 (KR); KOO, Min Su, Daejeon 34124 (KR); RYU, Ja Young, Daejeon 34124 (KR); SON, Sung Real, Daejeon 34124 (KR)
(74) Representative: Thoma, Michael
(86) International application number: PCT/KR2019/004189
(87) International publication number: WO 2019/199014

(57) **Abstract**

In a method of recovering an active metal of a lithium secondary battery, a cathode active material mixture obtained from a used cathode of a lithium secondary battery is prepared. The cathode active material mixture is reacted in a fluidized bed reactor to form a preliminary precursor mixture. A lithium precursor is recovered from the preliminary precursor mixture. Yield and selectivity of a lithium precursor can be improved using the fluidized bed reactor.

## Description

### CROSS REFERENCE TO RELATED APPLICATIONS AND CLAIM OF PRIORITY

This application claims benefit under 35 U.S.C. 119(e), 120, 121, or 365(c), and is a National Stage entry from International Application No. PCT/KR2019/004189 with an International Filing Date of April 9, 2019, which claims the benefit of Korean Patent Applications No. 10-2018-0040933 filed on April 9, 2018 and No. 10-2019-0017945 filed on February 15, 2019 at the Korean Intellectual Property Office, the disclosures of which are incorporated by reference herein in their entirety.

### BACKGROUND

### 1. Field

The present invention relates to a method of recovering an active metal from a lithium secondary battery. More particularly, the present invention relates to a method of recovering an active metal from a used cathode of a lithium secondary battery.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. The secondary battery includes, e.g., a lithium secondary battery, a nickel-cadmium battery, a nickel-hydrogen battery, etc. The lithium secondary battery is actively developed and applied due to high operational voltage and energy density per unit weight, a high charging rate, a compact dimension, etc.

The lithium secondary battery may include an electrode assembly including a cathode, an anode and a separation layer (a separator), and an electrolyte immersing the electrode assembly. The lithium secondary battery may further include an outer case having, e.g., a pouch shape for accommodating the electrode assembly and the electrolyte.

A lithium metal oxide may be used as an active material for a cathode of a lithium secondary battery. The lithium metal oxide may further include a transition metal such as nickel, cobalt, manganese, etc.

As the above-described valuable metals are used in the cathode active material, more than 20% of a manufacturing cost is required to prepare a cathode material. Additionally, as environmental issues have been recently highlighted, a recycling method of the cathode active material is being researched.

For example, a method of sequentially recovering valuable metals by precipitating a used cathode active material in a strong acid such as sulfuric acid is being researched. However, a washing process is required in the above-mentioned wet process, which may be disadvantageous from aspects of recycling selectivity, recycle time, etc.

For example, Korean Patent Registration No. 10-0709268 discloses an apparatus and a method for recycling a waste manganese battery and an alkaline battery, but does not provide a sufficient method for recovering valuable metals with high selectivity and low cost.

### SUMMARY

According to an aspect of the present invention, there is provided a method of recovering an active metal from a lithium secondary battery with high efficiency and high purity.

In a method of recovering an active metal of a lithium secondary battery according to exemplary embodiments of the present invention, a cathode active material mixture obtained from a used cathode of a lithium secondary battery is prepared. The cathode active material mixture is reacted in a fluidized bed reactor to form a preliminary precursor mixture. A lithium precursor is selectively recovered from the preliminary precursor mixture.

In exemplary embodiments, the preliminary precursor mixture may include preliminary lithium precursor particles and transition metal-containing particles.

In exemplary embodiments, the preliminary lithium precursor particles may include at least one of lithium hydroxide, lithium oxide or lithium carbonate.

In exemplary embodiments, the transition metal-containing particles may include nickel, cobalt, manganese or an oxide thereof.

In exemplary embodiments, in the formation of the preliminary precursor mixture, a reductive reaction gas may be injected into the fluidized bed reactor.

In exemplary embodiments, the reductive reaction gas may include hydrogen.

In exemplary embodiments, an injection flow rate of the reductive reaction gas may be greater than or equal to a bubble-formation fluidizing rate.

In exemplary embodiments, the injection flow rate of the reductive reaction gas may be 10 cm/s or more.

In exemplary embodiments, the injection flow rate of the reductive reaction gas may be less than or equal to a terminal velocity of the cathode active material mixture.

In exemplary embodiments, the fluidized bed reactor may include a reactor body and an upper portion of a reactor, and the upper portion may have a cross-section or a width greater than that of the reactor body. The cathode active material mixture or the preliminary precursor mixture may rise to the upper portion of the reactor, and may descend into the reactor body as a flow rate decreases.

In exemplary embodiments, the preliminary lithium precursor particles and the transition metal-containing particles may be collected commonly from the reactor body of the fluidized bed reactor.

In exemplary embodiments, in the formation of the preliminary precursor mixture, a carrier gas mixed with the reductive reaction gas may be injected from a lower portion of the fluidized bed reactor.

In exemplary embodiments, in the recovering of the lithium precursor, the preliminary lithium precursor particles may be washed with water.

In exemplary embodiments, the lithium precursor in a form of lithium hydroxide may be obtained by washing with water.

In exemplary embodiments, in the recovering of the lithium precursor, the preliminary lithium precursor particles may be reacted selectively with a carbon-containing gas.

In exemplary embodiments, the carbon-containing gas may include at least one of CO or CO₂, and the lithium precursor includes lithium carbonate.

In exemplary embodiments, a transition metal precursor may be recovered in a form of an acid salt by selectively treating the transition metal-containing particles with an acidic solution.

According to the above-described exemplary embodiments, a lithium precursor may be recovered from a used cathode active material through a dry-based process using a fluidized bed reactor. Thus, the lithium precursor may be obtained with high purity without an additional process resulting from a wet-based process.

Additionally, the lithium precursor may be recovered earlier than other transition metals through the fluidized bed reactor, so that selectivity and efficiency of the recovery process may be further improved.

### BRIEF DESCRIPTION OF THE DRAWINGS

FIG. 1 is a schematic flow diagram for describing a method of recovering an active metal from a lithium secondary battery in accordance with exemplary embodiments.
FIG. 2 is a schematic diagram for describing a fluidizing property in a fluidized bed reactor.
FIG. 3 is an XRD analysis graph of a preliminary precursor mixture collected by Experimental Example.

### DETAILED DESCRIPTION OF THE EMBODIMENTS

According to exemplary embodiments of the present invention, there is provided a method of recovering an active metal from a lithium secondary battery, which is a dry-based process using a fluidized bed reactor and provides high purity and high yield.

Hereinafter, embodiments of the present invention will be described in detail with reference to the accompanying drawings. However, the embodiments are provided as exemplary examples, and the spirit of the present invention are not limited to those specific embodiments.

The term "precursor" used herein broadly refers to a compound containing a specific metal to provide the specific metal included in an electrode active material.

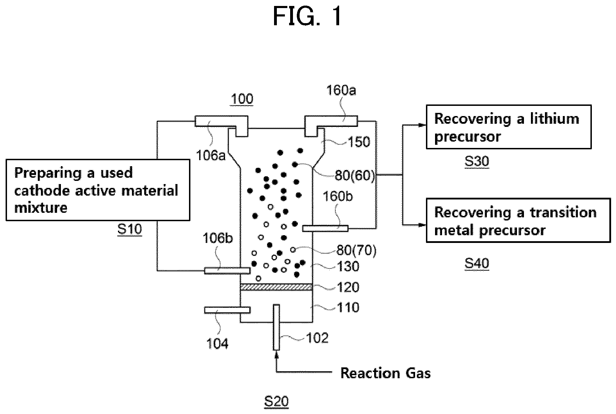

FIG. 1 is a schematic flow diagram for describing a method of recovering an active metal from a lithium secondary battery according to exemplary embodiments. For convenience of descriptions, FIG. 1 also includes a schematic diagram of a fluidized bed reactor together with a process flow.

Referring to FIG. 1, a cathode active material mixture may be prepared from a used cathode of a lithium secondary battery (e.g., in an operation of S10).

The lithium secondary battery may include an electrode assembly including a cathode, an anode and a separation layer interposed between the cathode and the anode. The cathode may include a cathode current collector and a cathode active material layer coated thereon, and the anode may include an anode current collector and an anode active material layer coated thereon.

For example, a cathode active material included in the cathode active material layer may include an oxide containing lithium and a transition metal.

In some embodiments, the cathode active material may include a compound represented by Chemical Formula 1 below.

[Chemical Formula 1] LiₓM1ₐM2_{b}M3_{c}O_{y}

In Chemical Formula 1, M1, M2 and M3 may be transition metals selected from Ni, Co, Mn, Na, Mg, Ca, Ti, V, Cr, Cu, Zn, Ge, Sr, Ag, Ba, Zr, Nb, Mo, Al, Ga or B. In Chemical Formula 1, 0<x≤1.1, 2≤y≤2.02, 0<a<1, 0<b<1, 0<c<1, 0<a+b+c≤1.

In some embodiments, the cathode active material may be an NCM-based lithium oxide containing nickel, cobalt, and manganese.

A used cathode may be recovered by separating the cathode from a used lithium secondary battery. As described above, the used cathode may include the cathode current collector (e.g., aluminum (Al)) and the cathode active material layer, and the cathode active material layer may include a conductive agent and a binder together with the above-described cathode active material.

The conductive agent may include, e.g., a carbon-based material such as graphite, carbon black, graphene, carbon nanotube, etc. The binder may include a resin material, e.g., vinylidene fluoride-hexafluoropropylene copolymer (PVDF-co-HFP), polyvinylidenefluoride (PVDF), polyacrylonitrile, polymethyl methacrylate, etc.

In exemplary embodiments, the recovered used cathode may be grinded to create a cathode active material mixture. Accordingly, the cathode active material mixture may be prepared in a powder form. The used cathode active material mixture may include a powder of the lithium-transition metal oxide as described above, and may include, e.g., an NCM-based lithium oxide powder (e.g., Li(NCM)O₂).

The term "cathode active material mixture" used herein may refer to a raw material that may be put into a fluidized bed reaction treatment as described later after the cathode current collector is substantially removed from the used cathode. In an embodiment, the cathode active material mixture may include cathode active material particles such as the NCM-based lithium oxide. In an embodiment, the cathode active material mixture may include components derived from the binder or the conductive agent. In an embodiment, the cathode active material mixture may essentially consist of the cathode active material particles.

In some embodiments, an average particle diameter (D50) of the cathode active material mixture may be from 5 to 100 µm. Within the above range, the lithium-transition metal oxide such as Li(NCM)O₂ may be easily separated from the cathode current collector, the conductive agent and the binder contained in the cathode active material mixture.

In some embodiments, the cathode active material mixture may be thermally treated before being introduced into a fluidized bed reactor as described below. The impurities such as the conductive agent and the binder contained in the cathode active material mixture may be removed or reduced by the thermal treatment, so that the lithium-transition metal oxide may be introduced into the fluidized bed reactor with high purity.

For example, the thermal treatments may be performed at a temperature in a range from about 100 to 500°C, preferably from about 350 to 450°C. Within the above range, decomposition and damage of the lithium-transition metal oxide may be prevented while substantially removing the impurities.

For example, in an operation of S20, the cathode active material mixture may be reacted in a fluidized bed reactor 100 to form a preliminary precursor mixture 80.

As illustrated in FIG. 1, the fluidized bed reactor 100 may be divided into a reactor body 130, a lower portion 110 of the reactor and an upper portion 150 of the reactor. The reactor body 130 may include a heating unit such as a heater or may be integrated with the heating unit.

The cathode active material mixture may be supplied into the reactor body 130 through supply flow paths 106a and 106b. The cathode active material mixture may be dropped through a first supply flow path 106a connected to the upper portion 150 of the reactor or may be introduced through a second supply flow path 106b connected to a bottom of the reactor body 130. In an embodiment, the cathode active material mixture may be supplied through both the first and second supply flow paths 106a and 106b.

For example, a support unit 120 may be disposed between the reactor body 130 and the lower portion 110 of the reactor so that powders of the cathode active material mixture may be landed. The support unit 120 may include pores through which a reaction gas and a carrier gas may be supplied as described later.

A reaction gas for converting the cathode active material mixture into a preliminary precursor may be supplied into the reactor body 130 through a reaction gas flow path 102 connected to the lower portion 110 of the reactor. In exemplary embodiments, the reaction gas may include a reductive gas. For example, hydrogen (H₂) may be supplied.

The reaction gas may be supplied from a lower portion of the fluidized bed reactor 100 to contact the cathode active material mixture, so that the cathode active material mixture may react with the reaction gas to be converted into the preliminary precursor while being transferred to the upper portion 150 of the reactor.

In some embodiments, the lithium-transition metal oxide may be reduced by the hydrogen gas so that a preliminary lithium precursor including, e.g., lithium hydroxide (LiOH), lithium oxide (e.g., LiO₂), etc., and a transition metal or a transition metal oxide may be created. For example, Ni, Co, NiO, CoO and MnO may be generated together with the lithium oxide by a reductive reaction.

The reductive reaction in the reactor body 130 may be performed at a temperature from about 400 to 700°C, preferably from 450 to 550°C. Within the reaction temperature range, the reductive reaction may be promoted without causing a re-aggregation and re-combination of the preliminary lithium precursor and the transition metal/transition metal oxide.

In some embodiments, a carrier gas may be supplied together with the reaction gas from the lower portion 110 of the reactor through a carrier gas flow path 104. For example, the carrier gas may include an inert gas such as nitrogen (N₂), argon (Ar), etc.

The carrier gas may be supplied from the lower portion 110 of the reactor to the reactor body 130, so that the transfer of the lithium-transition metal oxide or the preliminary precursor to the upper portion 150 of the reactor may be promoted.

A preliminary precursor mixture 80 including preliminary lithium precursor particles 60 and transition metal-containing particles 70 (e.g., the transition metal or the transition metal oxide) may be formed in the reactor body 130. The preliminary lithium precursor particles 60 may include, e.g., lithium hydroxide, lithium oxide, and/or lithium carbonate.

In an embodiment, the preliminary precursor mixture 80 including the preliminary lithium precursor particles 60 and the transition metal-containing particles 70 may be collected through a first outlet 160a connected to the upper portion 150 of the reactor 150. As will be described later, the upper portion 150 of the reactor may serve as an expansion portion so that a flow rate of the preliminary precursor mixture 80 may be reduced, and the preliminary precursor mixture 80 may be efficiently collected.

In an embodiment, the preliminary precursor mixture 80 including the preliminary lithium precursor particles 60 and the transition metal-containing particles 70 may be collected through a second outlet 160b connected to the reactor body 130. In this case, the preliminary precursor mixture 80 may be directly recovered from a fluidized bed forming region to increase a yield.

In an embodiment, the preliminary precursor mixture 80 may be collected together through the first and second outlets 160a and 160b.

The preliminary lithium precursor particles 60 collected through the outlet 160 may be recovered as a lithium precursor (e.g., in an operation of S30).

In some embodiments, the preliminary lithium precursor particles 60 may be washed with water. The preliminary lithium precursor particles in the form of lithium hydroxide (LiOH) may be substantially dissolved in water to be separated from the transition metal precursor and recovered in advance by the washing treatment. A lithium precursor substantially consisting of lithium hydroxide may be obtained through, e.g., a crystallization process of lithium hydroxide dissolved in water.

In an embodiment, the preliminary lithium precursor particles in the form of lithium oxide and lithium carbonate may be substantially removed through the washing treatment. In an embodiment, the preliminary lithium precursor particles in the form of lithium oxide and lithium carbonate may be at least partially converted to lithium hydroxide through the washing treatment.

In some embodiments, lithium carbonate (e.g., Li₂CO₃) may be obtained as a lithium precursor by reacting the preliminary lithium precursor particles 60 with a carbon-containing gas such as carbon monoxide (CO) and carbon dioxide (CO₂). A crystallized lithium precursor may be obtained through the reaction with the carbon-containing gas. For example, lithium carbonate may be collected by injecting the carbon-containing gas during the washing treatment.

A temperature of the crystallization reaction through the carbon-containing gas may be, e.g., in a range from about 60 to 150°C. Within this range, lithium carbonate may be produced without damaging a crystal structure and with high reliability.

According to exemplary embodiments as described above, the lithium precursor may be recovered by a consecutive dry process from the used cathode.

In a comparative example, a wet process such as a precipitation process using a strong acid may be used to recover lithium or a transition metal from a used secondary battery. However, in the case of the wet process, a selective separation of lithium may be limited. Further, a washing process is required to remove a solution residue, and a generation of by-products such as a hydrate may be caused due to a contact with the solution.

However, according to embodiments of the present invention, the lithium precursor may be collected through a dry consecutive process from which the use of a solution is excluded, so that by-products may be reduced and a production yield may be increased. Further, a wastewater treatment may not be required, thereby enabling an eco-friendly process design.

Additionally, the preliminary lithium precursor particles 60 may be selectively recovered in advance to the transition metal-containing particles 70 through the fluidized bed reactor 100, so that selectivity, yield and purity of the lithium precursor may be further improved.

In some embodiments, a transition metal precursor may be obtained from the collected transition metal-containing particles 70 (e.g., in an operation of S40).

For example, after collecting the preliminary lithium precursor particles 60 through the outlets 160a and 160b, the transition metal-containing particles 70 may be recovered. Subsequently, the transition metal-containing particles 70 may be treated with an acidic solution to form precursors in the form of acid salts of each transition metal.

In an embodiment, sulfuric acid may be used as the acidic solution. In this case, NiSO₄, MnSO₄ and CoSO₄ may be recovered as the transition metal precursors.

As described above, after collecting the lithium precursors by the dry process, the transition metal precursors may be selectively extracted using the acidic solution, so that purity and selectivity of each metal precursor may be improved, and load of a wet process may be reduced, resulting in a reduction of wastewater and by-products.

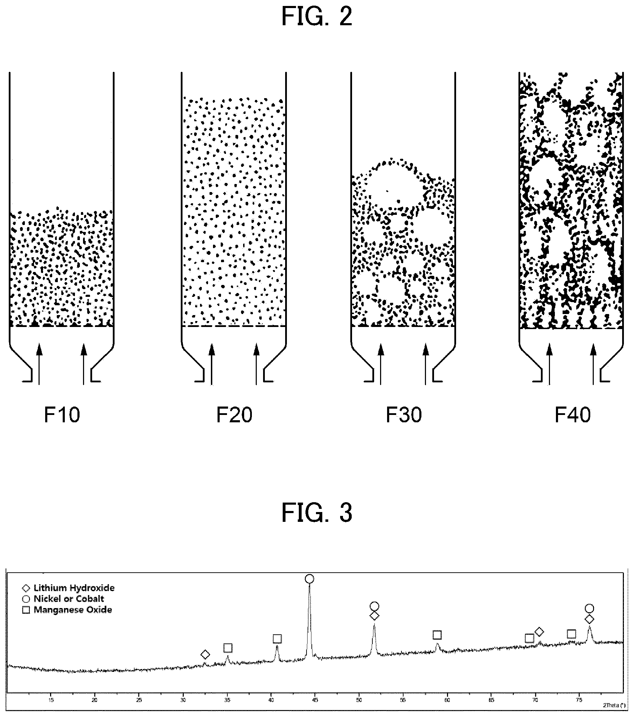

FIG. 2 is a schematic diagram for describing a fluidizing property in a fluidized bed reactor.

Referring to FIG. 2, the reaction gas may be introduced as indicated by an arrow in the fluidized bed reactor. As the reaction gas is introduced, a minimum fluidized rection bed forming phase F10 may proceed. As a flow rate of the reaction gas is increased, an intermediate smooth fluidization phase F20 may be performed, and then a bubble-forming fluidized reaction bed phase F30 may be performed.

In the bubble-forming fluidized reaction bed phase F30, reactive particles (e.g., the cathode active material mixture) may stay in a fluidized reaction bed and may not be scattered out of the fluidized reaction bed.

In exemplary embodiments, the flow rate of the reaction gas may be greater than or equal to a bubble-formation fluidizing rate. Accordingly, formation of the fluidized reaction bed with the reaction gas may be promoted through a sufficient dispersion of the cathode active material mixture having small particle sizes.

When the flow rate of the reaction gas is further increased, a turbulence fluidization phase F40 may be performed. In this case, fine particles that may individually behave among the reaction particles may be scattered to an outside of the fluidized reaction bed. For example, when the flow rate of the reaction gas becomes greater than or equal to a terminal velocity (Ut) of the reaction particles, the reaction gas and the reaction particles may be more vigorously mixed and may rise to a top of the fluidized bed reactor to make a reaction control substantially difficult.

In exemplary embodiments, the flow rate of the reaction gas may be greater than the bubble-formation fluidizing rate and less than the terminal velocity of the reactive particles. Accordingly, a sufficient reaction residence time of the reaction particles may be achieved, and a scattering of the fine particles having a small particle diameter in the cathode active material mixture may be suppressed. Additionally, the formation of the fluidized reaction bed having a sufficient length from the reaction gas and the reaction particles may be promoted.

As described above, the upper portion 150 of the reactor may serve an expanded portion having a diameter or width greater than that of the reactor body 130. In this case, even when the flow rate of the reaction gas exceeds the terminal velocity, the flow rate of the reaction particles and the reaction gas in the expanded portion may be decreased again to be less than the terminal velocity, and the reaction particles may be moved downwardly.

In an embodiment, the flow rate of the reaction gas may be about 10 cm/s or more. In this case, conditions equal to or higher than the bubble-formation fluidizing rate of the cathode active material mixture may be easily obtained.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Experimental Example

1 kg of a cathode material separated from a used lithium secondary battery was thermally treated at 450° C for 1 hour. The thermally treated cathode material was cut into small units and grinded by milling to obtain a sample of a Li-Ni-Co-Mn oxide cathode active material.

10 g of the cathode active material sample was loaded into a fluidized bed reactor, and a mixed gas of 20 wt% of hydrogen (a reaction gas) and 80 wt% of nitrogen (a carrier gas) was injected from a bottom of the reactor at a flow rate of 10 ml/min. A temperature inside the reactor was maintained at 450 °C. An XRD analysis was performed on a preliminary precursor mixture collected from an outlet of the reactor, and the results are shown in an XRD analysis graph of FIG. 2.

Referring to FIG. 3, the Li-Ni-Co-Mn oxide was decomposed by a reductive reaction in the fluidized bed reactor, and preliminary precursors including metals such as Ni and Co, manganese oxide, lithium hydroxide (LiOH), etc., were generated.

## Claims

1. A method of recovering an active metal from a lithium secondary battery, comprising:
preparing a cathode active material mixture obtained from a used cathode of a lithium secondary battery;
reacting the cathode active material mixture in a fluidized bed reactor to form a preliminary precursor mixture; and
selectively recovering a lithium precursor from the preliminary precursor mixture.

2. The method of claim 1, wherein the preliminary precursor mixture includes preliminary lithium precursor particles and transition metal-containing particles.

3. The method of claim 2, wherein the preliminary lithium precursor particles include at least one of lithium hydroxide, lithium oxide or lithium carbonate.

4. The method of claim 2, wherein the transition metal-containing particles include nickel, cobalt, manganese or an oxide thereof.

5. The method of claim 2, wherein forming the preliminary precursor mixture comprises injecting a reductive reaction gas into the fluidized bed reactor.

6. The method of claim 5, wherein the reductive reaction gas includes hydrogen.

7. The method of claim 5, wherein an injection flow rate of the reductive reaction gas is greater than or equal to a bubble-formation fluidizing rate.

8. The method of claim 7, wherein the injection flow rate of the reductive reaction gas is 10 cm/s or more.

9. The method of claim 7, wherein the injection flow rate of the reductive reaction gas is less than or equal to a terminal velocity of the cathode active material mixture.

10. The method according to claim 7, wherein the fluidized bed reactor comprises a reactor body and an upper portion of a reactor, the upper portion having a cross-section or a width greater than that of the reactor body,
wherein the cathode active material mixture or the preliminary precursor mixture rising to the upper portion of the reactor descends into the reactor body as a flow rate decreases.

11. The method of claim 5, further comprising collecting the preliminary lithium precursor particles and the transition metal-containing particles commonly from the reactor body of the fluidized bed reactor.

12. The method of claim 5, wherein forming the preliminary precursor mixture further comprises injecting a carrier gas mixed with the reductive reaction gas from a lower portion of the fluidized bed reactor.

13. The method of claim 2, wherein the recovering the lithium precursor comprises washing the preliminary lithium precursor particles with water.

14. The method of claim 13, wherein the lithium precursor in a form of lithium hydroxide is obtained by washing with water.

15. The method of claim 2, wherein recovering the lithium precursor comprises reacting the preliminary lithium precursor particles selectively with a carbon-containing gas.

16. The method of claim 15, wherein the carbon-containing gas includes at least one of CO or CO₂, and the lithium precursor includes lithium carbonate.

17. The method of claim 2, further comprising recovering a transition metal precursor in a form of an acid salt by selectively treating the transition metal-containing particles with an acidic solution.
